(19) Europäisches Patentamt / European Patent Office / Office européen des brevets

(11) **EP 2 418 814 A1**

(12) **EUROPEAN PATENT APPLICATION**

(43) Date of publication:
**15.02.2012 Bulletin 2012/07**

(51) Int Cl.:
*H04L 27/20* (2006.01)    *H04L 27/26* (2006.01)

(21) Application number: **10290441.4**

(22) Date of filing: **09.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Alcatel Lucent**
**75007 Paris (FR)**

(72) Inventors:
• **Buchali, Fred**
**71336 Waiblingen (DE)**

• **Dischler, Roman**
**70469 Stuttgart (DE)**
• **McQueen, Neil**
**73207 Plochingen (DE)**

(74) Representative: **MERH-IP**
**Matias Erny Reichl Hoffmann**
**Paul-Heyse-Strasse 29**
**80336 München (DE)**

(54) **OFDM subband processing**

(57) The present document relates to an OFDM (Orthogonal Frequency Division Multiplexing) subband processing method and a system for OFDM subband processing. In particular, the document relates to a method and system for reducing the out of frequency band contributions of an OFDM signal. An OFDM transmitter (110) is described. The OFDM transmitter comprises an inverse transform unit (113, 114, 115, 116) configured to transform a data sequence into a first and a succeeding second OFDM symbol; and an extension unit (117) configured to add an extension of length D samples to the first OFDM symbol. The inverse transform unit (113, 114, 115, 116) is configured to generate the second OFDM symbol in dependence of the extension length D.

Fig. 1

EP 2 418 814 A1

**Description**

**FIELD OF INVENTION**

The present document relates to an OFDM (Orthogonal Frequency Division Multiplexing) subband processing method and a system for OFDM subband processing. In particular, the document relates to a method and system for reducing the out-of-frequency band contributions of an OFDM signal.

**BACKGROUND**

Coherent optical OFDM is a promising candidate for high speed transmission systems performing at 100 Gbit/s data rates and beyond. The concept of coherent optical OFDM may also be applied to access systems which handle multi-point-to-point traffic and which provide traffic aggregation. Such OFDM based transmission systems may use WDM (Wavelength Division Multiplexing) techniques, wherein different wavelengths are used to transmit different OFDM signals.
In a point-to-point or multi-point-to-point optical WDM (Wavelength Division Multiplexing) system, a plurality of OFDM signals may be transmitted over a corresponding plurality of adjacent wavelengths, wherein each wavelength is associated with a different subband in the frequency domain. In other words, the plurality of OFDM signals are transmitted via a plurality of corresponding subbands.
Typically, the plurality of OFDM signals are not synchronized in the time domain, such that out-of-frequency band-contributions of a first OFDM signal in a first subband may interfere with a second OFDM signal of a second subband. I.e. out of frequency band contributions of OFDM signals of adjacent subbands may interfere, thereby reducing the transmission capacity and/or reliability of the optical transmission system.
It is therefore desirable to reduce the effect of out of frequency band contributions from OFDM signals in adjacent subbands of a WDM system. In other words, it is desirable to reduce the spectral energy of an OFDM signal outside the frequency range of the subband assigned to the respective OFDM signal.

**SUMMARY**

This object may be solved by the subject matter of the independent claims. Preferred embodiments can be derived from the dependent claims.
According to an aspect, an OFDM transmitter is described. The OFDM transmitter may comprise an inverse transform unit configured to transform a data sequence into a first and a succeeding second OFDM symbol. Typically, the inverse transform unit is configured to transform the data sequence, e.g. a sequence of bits, into a sequence of OFDM symbols, wherein the OFDM symbols are representable of or comprise a certain number of data segments, e.g. a certain number of bits of the data sequence. An OFDM symbol, e.g. the first and second OFDM symbol, may have a length of N samples. The inverse transform unit may comprise a serial-to-parallel unit configured to group a certain number of bits, e.g. one or more bits, of the data sequence. The inverse transform unit may comprise a mapping unit configured to assign the one or more bits of the data sequence to a data word. The data word may correspond to a point of a constellation of a modulation scheme. The modulation scheme may be e.g. BPSK, QPSK or M-PSK. As a result of the mapping operation, a sequence of data words may be determined, wherein each data word corresponds to a point of the constellation of the underlying modulation scheme.
The inverse transform unit may comprise an inverse frequency transform configured to transform N OFDM subcarriers, thereby generating the first and second OFDM symbol. In other words, the inverse frequency transform, e.g. an inverse FT (Fourier Transform), an inverse FFT (Fast Fourier Transform) or an inverse DFT (Discrete Fourier Transform), may generate an OFDM symbol from samples of N OFDM subcarriers, e.g. the frequency components of the FT, FFT or DFT. Typically, the number of samples of an OFDM symbol corresponds to the number of OFDM subcarriers. In order to include the information comprised within the data words into an OFDM symbol, one or more of the OFDM subcarriers may be modulated based on the data word. Typically, a point of the constellation of the underlying modulation scheme has a corresponding phase value. In general, a point of the constellation may often be described in the complex space using an amplitude and a phase. In case of M-PSK modulation, the different constellation points have a constant amplitude, such that the different constellation points are described by their respective phase value. The phase value of the constellation point corresponding to a data word may be used to phase modulate an OFDM subcarrier of the N OFDM subcarriers having an index n. As such, the modulated OFDM subcarrier n is representable of or comprises the respective data word. The modulated OFDM subcarrier $n$ may be used in the inverse frequency transform to generate an OFDM symbol. In other words, the inverse frequency transform may be configured to transform the N OFDM subcarriers comprising the modulated OFDM subcarrier n. As such, it may be stated that the resulting OFDM symbol may be representable of or comprises the particular data word which is used to modulate the OFDM subcarrier n.

The OFDM transmitter may comprise an extension unit configured to add an extension of length *D* samples to the first OFDM symbol. In particular, the extension unit may be configured to perform a cyclic extension of an OFDM symbol, e.g. the first OFDM symbol, thereby yielding an extended OFDM symbol. The extension may comprise a prefix, i.e. an extension at the beginning of the OFDM symbol, and/or a postfix, i.e. an extension at the end of the OFDM symbol. The prefix and/or the postfix may correspond to a copy of an excerpt of the samples of the OFDM symbol. In particular, the prefix may correspond to a number of samples from the end of the OFDM symbol, whereas the postfix may correspond to a number of samples from the beginning of the OFDM symbol. The extension unit may be configured to perform the extension on a sequence of OFDM symbols, i.e. each OFDM symbol of the sequence may be extended. The function of the extension is typically to provide a guard interval in order to reduce inter symbol interference (ISI). The extension length D may comprise the total prefix and/or postfix extension. The length of the extended OFDM symbol may be the sum of N and *D.*

The inverse transform unit may be configured to generate the second OFDM symbol in dependence of the extension length D. In other words, the inverse transform unit may be configured to generate an OFDM symbol by taking into account the length D of the extension which is applied to the directly preceding OFDM symbol. In particular, the inverse transform unit may be configured to perform a phase shift of an OFDM subcarrier in dependence of the extension length D. Even more particularly, when generating the second OFDM symbol, the phase of one or more OFDM subcarriers may be shifted compared to the phase of the one or more OFDM subcarriers used to generate the first OFDM symbol, i.e. the (directly) preceding OFDM symbol. The phase shift may take into account the extension length D and/or the phase difference between the preceding OFDM symbol and the current OFDM symbol.

The mapping unit may be configured to perform a phase rotation $\widetilde{\varphi}_{rotation}$ of the constellation which is used for generating the second OFDM symbol with regards to the constellation which is used for generating the first OFDM symbol. In other words, the mapping unit may be configured to rotate the constellation diagram from one OFDM symbol to the next OFDM symbol. The rotation of the constellation diagram may be different for each OFDM subcarrier. I.e. the mapping unit may be configured to perform the phase rotation $\widetilde{\varphi}_{rotation}$ of the constellation separately for some or each of the N OFDM subcarriers.

The phase rotation $\widetilde{\varphi}_{rotation}$ may be a function of the extension length D. I.e. the extent of rotation of the constellation diagram between two consecutive symbols may depend on the extension length D. The phase rotation $\widetilde{\varphi}_{rotation}$ may be dependent on a frequency $\dfrac{n}{N}$ of the OFDM subcarrier n. In other words, the phase rotation of the constellation diagram which is used to generate the data words which are assigned to the OFDM subcarrier *n* may depend on the frequency of this OFDM subcarrier. If the modulation scheme is M-PSK, the phase rotation of the constellation of OFDM subcarrier *n* may be any phase rotation of $\widetilde{\varphi}_{rotation} = -\left\{\left(D\,\dfrac{n}{N}+\dfrac{1}{2M}\right)\bmod \dfrac{1}{M}\right\}2\pi - 2i\,\dfrac{\pi}{M}$ with *i* being any of *i* = 0,...,*M*-1.

In particular, the phase rotation $\widetilde{\varphi}_{rotation}$ for *i*=O may be used. M may be the order of the modulation scheme, i.e. M may correspond to the number of constellation points of the PSK (phase shift keying) modulation scheme.

The inverse frequency transform may be configured to transform the N OFDM subcarriers comprising an OFDM subcarrier *m* carrying a pilot tone. Typically, the pilot tone corresponds to an OFDM subcarrier which is not modulated, such that the OFDM subcarrier m does not incur phase discontinuities at the border between succeeding OFDM symbols. The inverse transform unit may be configured to perform a phase shift of the OFDM subcarrier m prior to generating the second OFDM symbol. As indicated above, the phase shift may be dependent on the length D of the extension applied to the first OFDM symbol. In other words, the OFDM subcarrier corresponding to the pilot tone may be phase shifted from one OFDM symbol to the next OFDM symbol, wherein the extent of the phase shift may depend on the extension length D. Alternatively or in addition, the phase shift may be dependent on the frequency $\dfrac{m}{N}$ of the OFDM subcarrier m. In particular, the absolute value of the phase shift which may be applied to the OFDM subcarrier m may be $\varphi_{CPPF}=$

$$\left\{\left(D\,\frac{m}{N}\right)\bmod 1\right\}2\pi\,.$$

According to another aspect, an OFDM receiver is described. The OFDM receiver may interwork with the OFDM transmitter outlined in the present document. The OFDM receiver may comprise an extension removal unit configured to remove an extension of length D from a first extended OFDM symbol, thereby yielding a first OFDM symbol.

Typically, the extension removal unit may remove the extension from a sequence of extended OFDM symbols, thereby yielding a sequence of OFDM symbol. As indicated above, the extension may correspond to a prefix and/or postfix, e.g. based on cyclic extension. The extended OFDM symbol may have a length of D+Nsamples, wherein the OFDM symbol may have a length of $N$ samples.

The OFDM receiver may comprise a transform unit configured to transform the first OFDM symbol and a succeeding second OFDM symbol into a data sequence, by taking into account the extension length D. In particular, the OFDM receiver may be configured to perform the corresponding phase shift and/or rotation operations of the OFDM transmitter. The OFDM receiver, e.g. the transform unit, may be configured to perform a rotation of the constellation diagrams used to decode succeeding OFDM symbols. Alternatively or in addition, the OFDM receiver, e.g. the transform unit, may be configured to perform a phase shift of the OFDM subcarrier which corresponds to the pilot tone.

The transform unit may comprise a frequency transform configured to transform the first and second OFDM symbol into N OFDM subcarriers comprising a phase modulated OFDM subcarrier $n$ from which a first phase value and a second phase value can be extracted for the first and second OFDM symbol, respectively. In other words, a received OFDM symbol may be transformed into N OFDM subcarriers using the frequency transform, e.g. an FT, an FFT or a DFT. At least one of the OFDM subcarriers, e.g. OFDM subcarrier n, may have been phase modulated at a corresponding OFDM transmitter. The phase can be extracted from the OFDM subcarrier $n$, thereby yielding a first phase value for the first OFDM symbol and the second phase value for the second OFDM symbol. These phase values typically correspond to points of a constellation diagram, i.e. data words, of the underlying modulation scheme, e.g. M-PSK.

The transform unit may comprise a decision unit configured to map the first and second phase value of the OFDM subcarrier $n$ to a first and second data word, respectively. As indicated above, the first and second data word may correspond to a point of the constellation of the modulation scheme. The decision unit may be configured to perform a phase rotation $\tilde{\varphi}_{rotation}$ of the constellation which is used for mapping the second phase value to the second data word with regards to the constellation which is used for mapping the first phase value to the first data word. In other words, the constellation diagram used at the OFDM receiver may be rotated from one OFDM symbol to the next OFDM symbol, usually in sync with the rotation performed at the corresponding OFDM transmitter. The phase rotation $\tilde{\varphi}_{rotation}$ may be a function of the extension length D and/ or a function of the frequency of the OFDM subcarrier n. In particular, the phase rotation may be performed in accordance to the formula provided for the OFDM transmitter.

According to a further aspect, a method for generating an OFDM signal comprising a first and second OFDM symbol is described. In particular, the method is directed at providing an OFDM signal comprising reduced out of frequency band power. The method may comprise the step of generating the first and the succeeding second OFDM symbol from a data sequence, the first and second OFDM symbol having a respective length of $N$ samples. As outlined in the context of the corresponding OFDM transmitter, the second OFDM symbol may be generated by taking into account the extension length D. Subsequent to the generation of the first ODM symbol, the method may proceed in adding an extension of length D samples to the first OFDM symbol.

It should be noted that a further method may be directed at receiving an OFDM signal which has been generated in accordance to the method outlined above. In a similar manner to the OFDM receiver described in this document, the method may comprise a step of extracting a data sequence from a sequence of received OFDM symbols. The extraction operation, i.e. in particular the decision operation, performed for a second received OFDM symbol may depend on the extension length D of a prefix and/or postfix of a preceding first received OFDM symbol.

According to another aspect, an OFDM signal comprising a first and a (directly succeeding) second OFDM symbol is described. The first OFDM symbol may comprise a cyclic extension of length D, i.e. the first OFDM symbol may be an extended OFDM symbol. The data comprised within the first and second OFDM symbol may be represented within a constellation of a modulation scheme. The constellation used for the second OFDM symbol may be rotated with regards to the constellation used for the first OFDM symbol. The degree of rotation may be dependent on the extension length D.

According to a further aspect, an OFDM network is described. The OFDM network may comprise a plurality of OFDM transmitters according to any of the features and functions outlined in the present document. The plurality of OFDM transmitters may be configured to generate a plurality of OFDM signals in adjacent frequency subbands. The plurality of OFDM signals may be generated from a data sequence, e.g. a single data sequence, thereby enabling an increased overall transmission rate. The frequency subbands may correspond to subbands of a WDM (wavelength division multiplexing) network. Alternatively or in addition, the OFDM network may comprise a plurality of OFDM receivers according to any of the features and functions outlined in the present document. The OFDM receiver may be configured to re-generate the data sequence from the plurality of OFDM signals.

According to a further aspect, a software program is described. The software program may be adapted for execution on a processor and for performing the method steps outlined in the present document when carried out on a computing device.

According to another aspect, a storage medium is described. The storage medium may comprise a software program adapted for execution on a processor and for performing the method steps outlined in the present document when carried out on a computing device.

According to a further aspect, a computer program product is described. The computer program may comprise executable instructions for performing the method steps outlined in the present document when executed on a computer.

It should be noted that the above mentioned aspects may be combined with one another or extracted from one another in various ways. In particular, all possible claim and feature combinations are considered to be disclosed by the present document. Furthermore, the aspects and features outlined in relation with a system are equally applicable in relation to the corresponding method.

SHORT DESCRIPTION OF THE FIGURES

Some embodiments of the systems and methods in accordance with embodiments of the present invention are now described, by way of example only, and with reference to the accompanying drawings, in which:

Fig. 1 illustrates an example OFDM transmission system;
Fig. 2 is a schematic diagram of an example point-to-point WDM transmission system;
Fig. 3 is a schematic diagram of an example multipoint-to-point WDM transmission system;
Fig. 4 is a schematic diagram of out of frequency band contributions of an example OFDM signal;
Fig. 5 illustrates example constellation diagrams for QPSK and 8-PSK;
Fig. 6 is a schematic diagram of the subcarriers of an example OFDM signal comprising cyclic extension;
Fig. 7 is a schematic diagram illustrating an example rotation of a constellation; and
Fig. 8 is a schematic diagram of an example OFDM receiver for OFDM signals within non-orthogonal subbands.

**DESCRIPTION OF EMBODIMENTS**

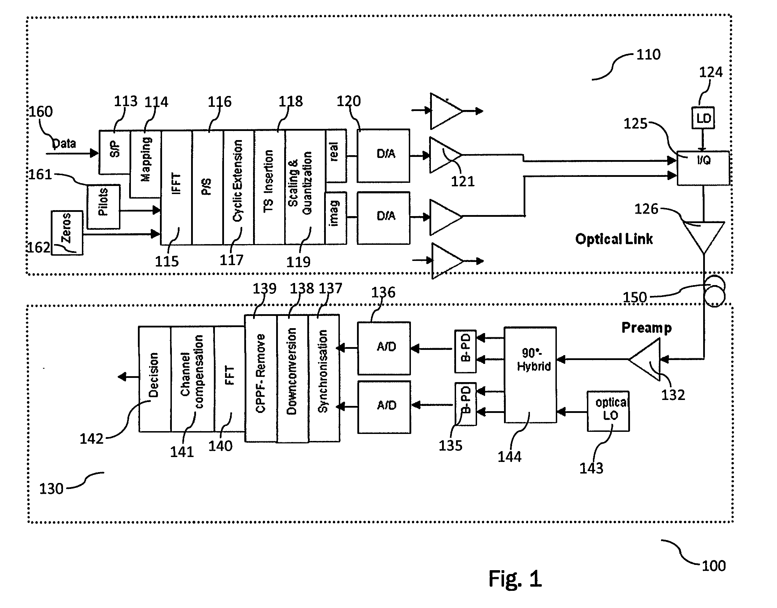

Fig. 1 shows an example optical OFDM transmission system 100, comprising an OFDM transmitter 110, an OFDM receiver 130 and an optical transmission channel 150. At the OFDM transmitter 110 a digital input signal 160 is received and passed into a serial-to-parallel unit 113. Such a serial-to-parallel unit 113 gathers blocks of $K$ bits of the digital input signal 160 and passes theses blocks of $K$ bits sequentially to a mapping unit 114 which maps each block of $K$ bits to a data word. The mapping is performed using the constellation of the underlying modulation scheme, e.g. QPSK, M-PSK, QAM16 or QAM64. The words are assigned to one of N subcarriers in a sequential and cyclic manner, i.e. the first word is assigned to the first subcarrier, the second word is assigned to the second subcarrier and so on. After having assigned the $N^{th}$ word to the $N^{th}$ subcarrier, the $(N+1)^{th}$ word is again assigned to the first subcarrier, and so on. It should be noted that in addition to the digital input signal 160, also pilot words 161 and zeros 162 may be assigned to the $N$ subcarriers.

The N subcarriers are typically transformed using an inverse Fast Fourier Transform (IFFT) 115 and merged in a following parallel-to-serial (P/S) unit 116, thereby yielding a digital output signal, or a digital version of an electrical output signal. As a result of the IFFT 115 and P/S operation 116, a sample of the N subcarriers is transformed into N samples of the digital output signal. Such a group of N samples of the digital output signal may be referred to as an OFDM symbol. Each OFDM symbol comprises or is representative of the N words which were assigned to the $N$ subcarrier.

The digital output signal, i.e. the OFDM symbols, may be further processed in a plurality of digital signal processing steps prior to transmission. Typically, in a cyclic extension unit 117, cyclic prefix and/or postfix samples may be inserted to the digital output signal so as to provide a guard interval in order to avoid intersymbol interference (ISI). In other words, a prefix and/or a post fix may be added to an OFDM symbol, i.e. an OFDM symbol may be extended by adding additional samples at the beginning and/or the end of the OFDM symbol. Typically, a repetition of samples of the OFDM symbol is appended to the beginning and/or the end of the OFDM symbol. By way of example, if the samples of an OFDM symbol are written as $[x(0),..., x(N-1)]$, a cyclic prefix of length L may be provided by appending the L last samples $[x(N-L-1,..., x(N-1)]$ of the OFDM symbol to the beginning of the OFDM symbol, thereby yielding an extended OFDM symbol $[x(N-L-1, ..., x(N-1), x(0), ..., x(N-1)]$. In a similar manner, a cyclic postfix of length L may be provided by appending the L first samples $[x(0), ..., x(L-1)]$ of the OFDM symbol to the end of the OFDM symbol, thereby yielding an extended OFDM symbol $[x(0),..., x(N-1), x(0), ..., x(L-1)]$. If both, cyclic prefix and postfix extension are used, an extended OFDM symbol $[x(N-L-1, ..., x(N-1), x(0), ..., x(N-1), x(0), ..., x(L-1)]$ is obtained. The combined use of prefix and postfix is also referred to as CPPF (cyclic pre- and post-fix). It should be noted that the length L of the prefix and the length L of the postfix may be different. The overall length of the pre- and/or post-fix will be referred to as the cyclic extension length D.

In a TS insertion unit 118, a training sequence for the determination of the conditions of the optical transmission channel 150 may be inserted. Furthermore, in a scaling & quantization unit 119 the digital output signal may be adjusted to the characteristics, notably the resolution, of the digital-to-analog converters 120.

In the digital-to-analog (D/A) converters 120 the real and imaginary part of the digital output signal is converted into two analog output signals, or an analog version of the electrical output signal. These two analog output signals are amplified in power amplifiers 121. Subsequently, the amplified analog output signals are converted into real and imaginary parts of an optical signal in an electrical-to-optical converter 124, 125. The electrical-to-optical converter 124, 125 may comprise a light diode or laser (e.g. a laser diode) 124 which is modulated in a modulation unit 125 with the amplified analog output signal. The OFDM transmitter or transponders 110 may also comprise an optical amplifier 126.

After transmission over the optical transmission channel 150, the OFDM signal is received at the optical OFDM receiver 130. The optical input signal may be preamplified 132 before being converted into an electrical input signal in a coherent detector. The coherent detector typically comprises a local oscillator 143 which is used to perform a down-conversion of the optical input signal into an intermediate frequency band. Furthermore, the coherent detector may comprise a 90˚ hybrid 144 which generates an in-phase and a quadrature-phase component of the optical input signal. Eventually, the coherent detector comprises photodiodes 135 in order to generate a complex electrical input signal comprising an in-phase component and a quadrature-phase component. The complex electrical input signal to the OFDM receiver 130 is converted into a digital input signal using analog-to-digital (A/D) converters 136. This digital input signal may be processed in a number of digital signal processing steps before being split into N subcarriers using a Fast Fourier Transform 140. Such processing may comprise synchronization 137, down-conversion into the baseband 138 and the removal of the cyclic prefix and/or postfix samples 139. After passing the Fast Fourier Transform 140, the received OFDM signal is split into $N$ subcarriers comprising subcarrier words. These words need to be mapped to the constellation points of the underlying modulation scheme, e.g. QPSK, M-PSK, QAM16 or QAM64. This is done in a decision unit 142. As the received subcarrier words have typically incurred significant distortions during the transmission over the optical transmission channel 150, it may be beneficial to perform channel compensation 141 prior to making a decision in decision unit 142. Such a channel compensation unit 141 typically comprises channel equalizers that have been trained using training sequences inserted into the OFDM signal. Then, the decision unit 142 maps the received subcarrier symbols into blocks of $K$ bits. The digital output signal of the OFDM receiver may be obtained by concatenating the blocks of $K$ bits in a sequential and cyclic manner, i.e. by concatenating the blocks of $K$ bits of the $N$ subcarriers in a sequential and cyclic manner.

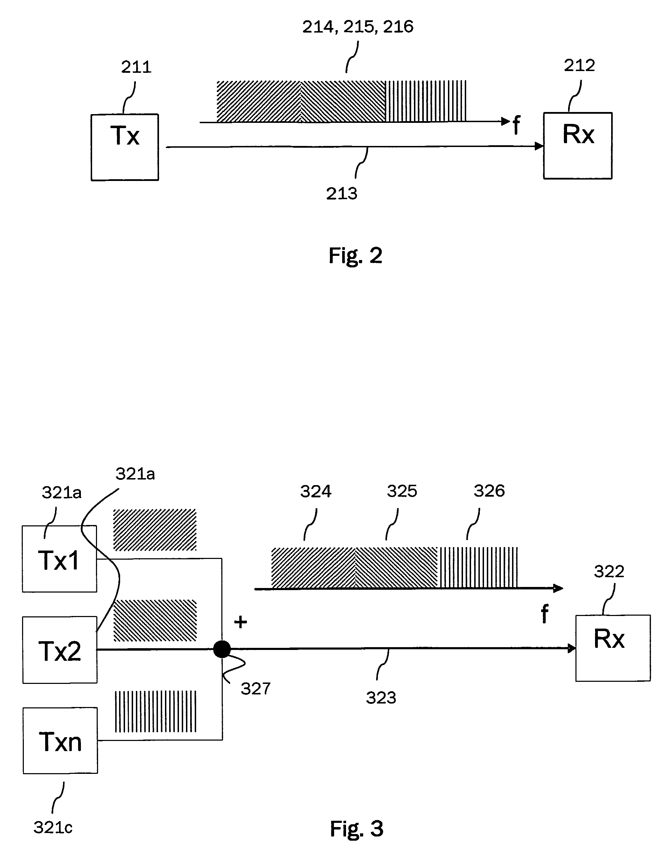

The OFDM transmission system illustrated above may be used in combination with WDM (wavelength division multiplexing), wherein an OFDM signal is assigned to a wavelength of the WDM system. As such, the light diode or laser 124 of the optical transmission system 100 described above may correspond to a particular wavelength of a WDM system. As such, a plurality of OFDM signals may be transmitted over a corresponding plurality of subbands of a WDM system. This is illustrated in Fig. 2, where a schematic diagram of an example point-to-point WDM transmission system is shown.

Therein, a transmitter 211 is connected over an optical link 213 to a receiver 212. The transmitter 211 may be a WDM transmitter configured to multiplex a plurality of OFDM signals onto a plurality of different wavelengths. In particular, a plurality of analog OFDM signals (generated within a plurality of OFDM transmitters 110) may be assigned to a corresponding plurality of WDM subbands using a plurality of electrical-to-optical converters 124, 125, wherein each group of electrical-to-optical converters 124, 125 provides a different wavelength of the WDM system. The optical link 213 may be an optical waveguide, e.g. a (single mode or multimode) optical fiber. The WDM transmitter 211 may generate optical signals by use of a plurality of LEDs (Light Emitting Diode) or lasers, e.g. semiconductor lasers. In Fig. 2, the transmitter 211 transmits data over a frequency band which is divided into three WDM subbands 214, 215, 216. Each subband 214, 215, 216 carries a different OFDM signal, thereby yielding a plurality of OFDM signals in adjacent WDM subbands.

Fig. 3 is a schematic diagram of an example multipoint-to-point WDM transmission system. Therein, three transmitters 321a, 321b, 321c are connected over an optical link 323 to a receiver 322. Each of the three transmitters 321a, 321b, 321c uses a different wavelength of the WDM system, which are merged in an optical combiner 327, thereby yielding an optical WDM signal comprising three subbands 314, 315, 316. In a similar manner to Fig. 2, the transmitters 321a, 321b, 321c may transmit different OFDM signals which are assigned to different wavelengths. Downstream of the optical combiner 327, the OFDM signals form an optical WDM signal which comprises the OFDM signals in different adjacent subbands.

It should be noted that Fig. 2 and Fig. 3 are only examples of WDM transmission systems making use of OFDM. In general terms, an optical network may comprise a plurality of transmitters and receivers connected via a plurality of optical links. Furthermore, the network may comprise optical splitters and/or combiners, as well as optical multiplexers and/or de-multiplexers, in order to transmit an OFDM signal from a transmitter to a corresponding receiver using an assigned WDM subband.

As outlined above, the WDM transmission of a plurality of OFDM signals may lead to the situation that different OFDM signals are transmitted in adjacent WDM subbands. Typically, the individual subbands are not synchronized in the time domain. As a result, the OFDM signals in the subbands may be orthogonal or non-orthogonal with respect to one another. In case of a non-orthogonal relation, the OFDM signals within adjacent subbands may interfere with each other. This interference is high if the out of frequency band contributions of the OFDM signals are high, i.e. if the OFDM signals comprise frequency components which correspond to frequencies of an adjacent subband. Therefore, in order to enable a high performance operation for the non-orthogonal subband case of a WDM system using OFDM, a reduction of contributions of the OFDM signals should be achieved.

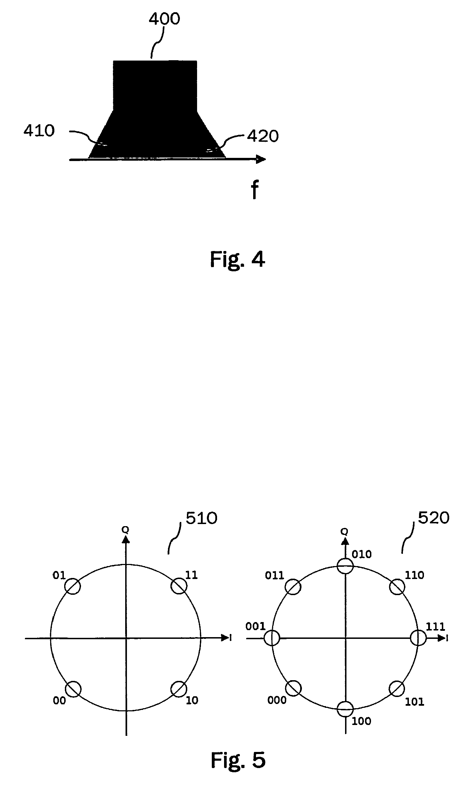

Fig. 4 is a schematic diagram of a subband 400 with out of frequency band contributions 410, 420. It can be seen that the OFDM signal does not only cover the frequency range of the assigned subband, but also comprises frequency components 410, 420 which enter the adjacent subbands. These out of frequency band contributions 410, 420 of an OFDM signal may be due to discontinuities caused by the underlying modulation scheme of the OFDM signal, as will be described in the following. In particular, the out of frequency band contributions 410, 420 may be due to the phase difference of two succeeding words which are assigned to a particular OFDM subcarrier. This phase difference is a result of the different phases of the different point of the constellation of the underlying modulation scheme. In other words, the phase difference of the different constellation points of the underlying modulation scheme may have an impact on the out of frequency band contributions 410, 420 of an OFDM signal.

As outlined above, an OFDM signal comprises a plurality of N subcarriers, wherein each subcarrier corresponds to a component of the Fast Fourier Transform (FFT) at a different frequency. In the discrete case, the $n^{th}$ component of the FFT may be written as: $X_n \exp(-j2\pi k \frac{n}{N})$ , i.e. the $n^{th}$ component of the FFT corresponds to a complex sinusoid having a frequency $\frac{n}{N}$ (typically $n=0,...,N$-1). The index $k=0,...,N$-1 indicates a sample within an OFDM symbol. As such, each OFDM subcarrier corresponds to a complex sinusoid having a different frequency. The OFDM subcarriers are modulated with different data words $X_n$, wherein each data word corresponds to a constellation point within the constellation diagram of the underlying modulation scheme. In the case of modulation schemes which are based on phase shift keying (PSK), the different constellation points correspond to different phase values in the complex space.

This is illustrated in Fig. 5, where the constellation diagram of QPSK (reference numeral 510) and 8-PSK (reference numeral 520) are illustrated. It can be seen that the different constellation points correspond to different phase

values φ. As such, the modulated subcarriers of the OFDM signal may be written as: $\exp(-j2\pi k \frac{n}{N} + \varphi_n)$ , wherein

$\varphi_n$ is the phase value of the constellation point corresponding to the data word which is assigned to the $n^{th}$ subcarrier.

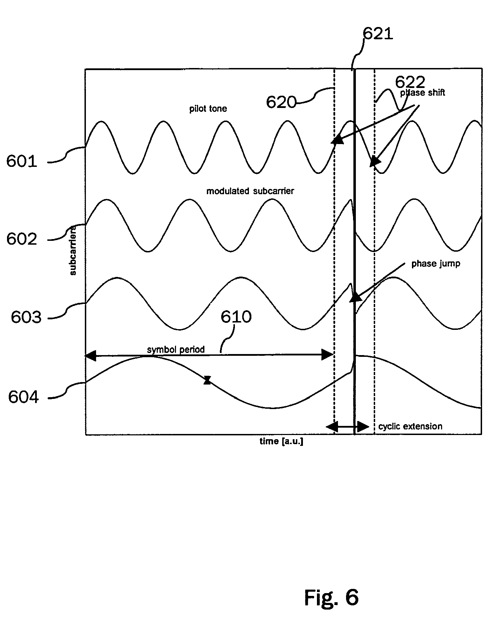

An OFDM signal comprises a sequence of OFDM symbols, wherein the subcarriers of succeeding OFDM symbols are modulated by different data words. As such, the phase $\varphi_n$ of the modulated subcarrier $n$ is typically different from one OFDM symbol to the next. These differences in phase between the modulated subcarriers of succeeding OFDM symbols may lead to phase jumps or phase discontinuities at the (time) border of the two succeeding OFDM symbols. This is shown in Figure 6, where example subcarriers of an OFDM signal are illustrated.

Fig. 6 illustrates four example subcarriers 601, 602, 603 and 604. It can be seen that the four subcarriers have different frequencies, i.e. the number of (sinusoidal) periods within the OFDM symbol period 610 is different for each of the example subcarriers 601, 602, 603 and 604. Furthermore, it can be seen in Fig. 6 that the OFDM symbol period 610 is extended as a result of cyclic extension. In the illustrated example, the postfix extension 620 of a first OFDM symbol and the prefix extension 622 of a second OFDM symbol are shown. As a result, the OFDM symbol period 610 is extended to an extended period comprising a prefix extension 622 and a postfix extension 620. If it is assumed that the total prefix and postfix extension corresponds to a length of D, e.g. $D=2L$, samples, then the sample index k varies from $k=0,...,N+D$-1 for the extended OFDM symbol period.

The subcarrier 601 of Fig. 6 corresponds to the subcarrier assigned to the pilot tone. The pilot tone may be used for channel conditions estimation and time and frequency synchronization in a receiver 130. The pilot tone may be assigned to the OFDM subcarrier having the highest frequency. This may be advantageous with regards to the reduction of the out of frequency band contributions of the OFDM signal, due to the fact that the pilot tone is usually not modulated with data words. Consequently, it may be ensured that there is no phase discontinuity of the subcarrier which is assigned to the pilot tone at the time borders of succeeding OFDM symbols.

Apart from the subcarrier 601 corresponding to the pilot tone, Fig. 6 illustrates three modulated subcarriers 602, 603 and 604. It can be seen that at the time border 621 of two succeeding (extended) OFDM symbols, there is a discontinuity of the phase of the subcarrier signals 602, 603 and 604. As outlined above, this phase discontinuity may be due to the change in phase $\varphi_n$ which is used to modulate the $n^{th}$ subcarrier of succeeding OFDM symbols.

An abrupt change in the phase of a subcarrier, i.e. a phase jump, involves frequencies of higher magnitude than the subcarrier frequency. Consequently, the phase jump or phase discontinuity may produce out of frequency band contributions, i.e. the phase discontinuity may produce high frequency components which extend beyond the frequency subband attributed to the OFDM signal. As outlined above, these out of frequency band contributions may interfere with the OFDM signals comprised within adjacent subbands, thereby reducing the overall transmission capacity of the WDM system. It is therefore desirable to reduce the out of frequency band contributions. This can be achieved by reducing the degree of phase discontinuities. In other words, by reducing the phase discontinuities of the OFDM subcarriers at the time borders of the OFDM symbols, high frequency contributions of the discontinuities can be reduced, thereby reducing the overall out of frequency band contributions of the OFDM signal. This is particularly relevant for the outer subcarriers of the OFDM band, i.e. of the subcarriers which are positioned at the edge of the attributed subband of the OFDM signal.

In the following, the phase discontinuities between succeeding OFDM symbols are analyzed in further detail. As illustrated in Fig. 5 different modulation schemes allow for a different set of phase values $\varphi$. It can be seen that QPSK allows for four different phase values $\varphi \in \left\{ -\dfrac{3\pi}{4}, -\dfrac{\pi}{4}, +\dfrac{\pi}{4}, +\dfrac{3\pi}{4} \right\}$ , whereas 8-PSK allows for eight different phase

values $\varphi \in \left\{ -\pi, -\dfrac{3\pi}{4}, -\dfrac{\pi}{2}, -\dfrac{\pi}{4}, 0, +\dfrac{\pi}{4}, +\dfrac{\pi}{2}, +\dfrac{3\pi}{4} \right\}$ .

The maximum phase difference between two succeeding data words, i.e. between two succeeding constellation points, is $\Delta\varphi_{max} = \pm\pi$.

This maximum possible phase difference may be reduced by turning the constellation diagram between two succeeding data words of an OFDM subcarrier. I.e. the constellation diagram may be rotated from one OFDM symbol to the next. The rotation of the constellation diagram should be performed in sync at an OFDM transmitter 110 and at a corresponding OFMD receiver 130.

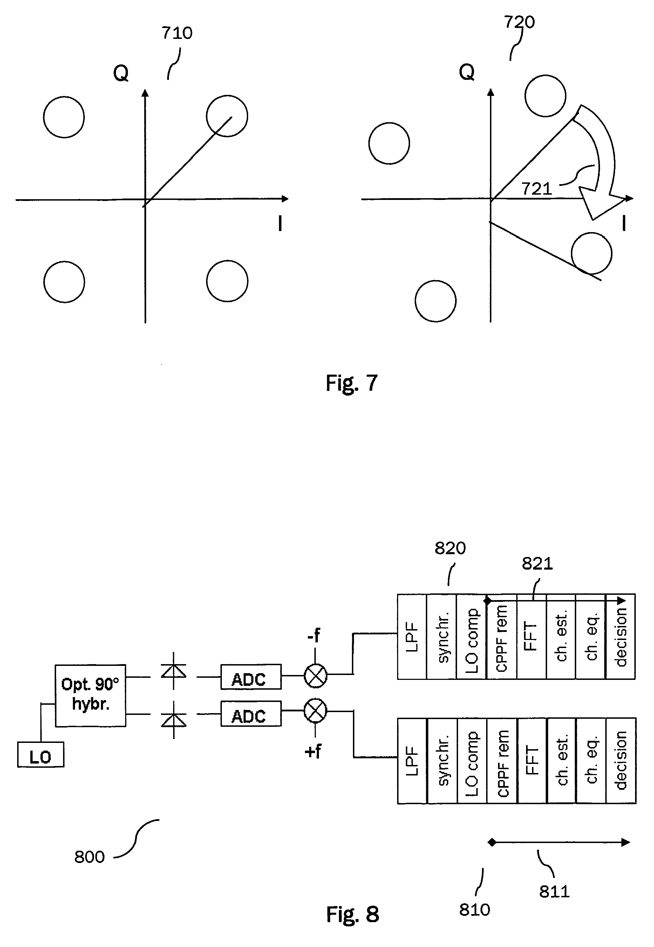

The rotation of a constellation diagram is illustrated in Fig. 7 for the constellation diagram of QPSK. The diagram 710 corresponds to the constellation diagram used for encoding a data word at time instant $t_1$, wherein the diagram 720 corresponds to the constellation diagram used for encoding a data word at the (directly) succeeding time instant $t_2$. It can be seen that the diagrams 710, 720 differ in a phase rotation 721. In other words, the constellation diagram 720 corresponds to the diagram 710, however, rotated by a phase $\varphi_{rotation}$ (reference numeral 721). It can be shown that in the absence of cyclic extension the phase rotation which is to be applied to the QPSK constellation diagram 710 for succeeding OFDM symbols is $\varphi_{rotation} = -\dfrac{\pi}{4}$. As a result, the maximum phase difference between two succeeding constellation points is reduced to $\Delta\varphi_{max} = \pm\dfrac{3\pi}{4}$. In a similar manner, it can be determined that the phase rotation which is to be applied to the 8-PSK constellation diagram 520 is $\varphi_{rotation} = -\dfrac{\pi}{8}$ , thereby reducing the maximum

phase difference to $\Delta\varphi_{max} = \pm\dfrac{7\pi}{8}$. In general terms, the phase rotation for M-PSK should be $\varphi_{rotation} = -\dfrac{\pi}{M}$ ,

thereby reducing the maximum phase difference to $\Delta\varphi_{max} = \pm\dfrac{(M-1)\pi}{M}$ . It should be noted that the above reduction of the maximum phase difference $\Delta\varphi_{max}$ can be achieved by applying any even multiple of the above phase rotations,

i.e. $\varphi_{rotation} = -\dfrac{\pi}{M} - 2i\dfrac{\pi}{M}, i = 0, ..., M-1$.

By applying a phase rotation $\varphi_{rotation}$ to the constellation diagram between succeeding OFDM symbols at the OFDM transmitter 110 and by applying the corresponding phase rotation to the constellation diagram at the OFDM transmitter 130, the degree of phase discontinuities at the (time) border between two succeeding OFDM symbols can be reduced.

In the following, the situation will be analyzed when cyclic extension is applied to the beginning and/or the end of an OFDM symbol. It can be seen from Fig. 6 that the subcarriers evolve within the postfix period 622 and the prefix period 620. The extent of evolution of the subcarrier, i.e. the extent of phase change within the pre- and/or post-fix periods, depends on the total length D of the cyclic extension and the frequency of the respective subcarrier. As outlined above, the frequency of the $n$th subcarrier is $\dfrac{n}{N}$ (measured in [number of periods per N sample of the OFDM symbol]), such that the number of periods within the total extension period of length D (measured in [samples]) is $D\dfrac{n}{N}$. This corresponds N to a net phase evolution, i.e. a phase evolution excluding full periods, of

$$\varphi_{CPPF} = \left\{\left(D\frac{n}{N}\right)\text{mod}1\right\}2\pi .$$

As outlined above, the phase rotation which is to be applied between succeeding OFDM symbols is any one of $\varphi_{rotation} = -2i\dfrac{\pi}{M}, i = 1,...,M$, in the case of M-PSK. If M cyclic extension is used, a phase evolution of $\varphi_{CPPF}$ occurs within the prefix and/or postfix period. This phase evolution $\varphi_{CPPF}$ can be thought of as a rotation of the constellation diagram caused by the cyclic extension. This rotation needs to be compensated for, in order to achieve the desired phase rotation $\varphi_{rotation}$. Consequently, the phase rotation to be applied when taking into account the cyclic pre- and/or postfix is:

$$\widetilde{\varphi}_{rotation} = -\left\{\left(D\frac{n}{N} + \frac{1}{2M}\right)\text{mod}\frac{1}{M}\right\}2\pi .$$

In a similar manner to the phase rotation which does not take into account cyclic extension, due to the symmetry of the constellation diagram of M-PSK, the actual phase rotation may be selected from the set of

$$\widetilde{\varphi}_{rotation} = -\left\{\left(D\frac{n}{N} + \frac{1}{2M}\right)\text{mod}\frac{1}{M}\right\}2\pi - 2i\frac{\pi}{M}, i = 0,...,M-1 .$$

As such, the phase rotation $\widetilde{\varphi}_{rotation}$ which is to be applied in order to reduce the maximum phase difference $\Delta\varphi_{max}$ to $\Delta\varphi_{max} = \pm\dfrac{(M-1)\pi}{M}$ is a function of the modulation scheme, i.e. M, of the length of the total cyclic extension period, i.e. $D$, and of the OFDM subcarrier, i.e. n. In case of QPSK, i.e. $M$=4, the phase rotation is given by

$$\widetilde{\varphi}_{rotation} = -\left\{\left(D\frac{n}{N} + \frac{1}{8}\right)\text{mod}\frac{1}{4}\right\}2\pi .$$

Another aspect is the continuity of the pilot tone. As indicated above, the subcarrier which carries the pilot tone is not modulated. However, if cyclic extension is used, the subcarrier evolves within the cyclic extension period, such that a phase discontinuity may occur at the border between OFDM symbols. As outlined above, the net phase evolution of the $n$th subcarrier within the extension period is $\varphi_{CPPF} = \left\{\left(D\dfrac{n}{N}\right)\text{mod}1\right\}2\pi .$ By applying a corresponding inverse phase shift to the subcarrier of the pilot tone from OFDM symbol to OFDM symbol the phase discontinuities of the subcarrier, which are caused by the cyclic extension, can be removed. It can be seen from the above formula, that the phase shift which is to be applied from symbol to symbol is dependent on the length of the cyclic extension period (D) and on the subcarrier frequency ($n/N$).

In an embodiment, the underlying modulation scheme is QPSK, i.e. $M$=4, the number of points of the FFT is $N$=256 and the total length of the cyclic extension period (CPPF) is D=16. If it is assumed that the pilot tone corresponds to subcarrier $n$=97, a phase shift of $\varphi_{CPPF} = -\dfrac{\pi}{8}$ is to be applied between succeeding OFDM symbols to subcarrier $n$=97. As a result of this phase shift, a continuous pilot tone may be obtained.

If it is assumed that subcarrier $n$=96 is used for the transmission of data words, the above formulas indicate that for this particular subcarrier, the constellation should be rotated by $\widetilde{\varphi}_{rotation} = -\dfrac{\pi}{4} \ (-i\dfrac{\pi}{2}, i = 0,...,3)$ from OFDM symbol to OFDM symbol. This is due to the fact that the number of periods of subcarrier $n$=96 within the extension interval is an integer number. On the other hand, for subcarrier $n$=95, the constellation should be rotated by

$$\widetilde{\varphi}_{rotation} = -\dfrac{\pi}{8} \ (-i\dfrac{\pi}{2}, i = 0,...,3)$$ from OFDM symbol to OFDM symbol.

By applying a phase shift to the subcarrier which carries the pilot tone and by performing a phase rotation of the constellation diagram, it is possible to reduce the phase discontinuities of the OFDM subcarriers which may occur at the borders of OFDM symbols. As a consequence of the reduction of the phase discontinuities, the corresponding high frequency contributions can be reduced, thereby reducing the out of frequency band contributions of the OFDM signal. Due to the fact that inner subcarriers of the OFDM signal typically have negligible contributions to the out of frequency band power, these subcarriers may be modulated using fixed constellations (even though a rotation of the constellation may still be beneficial), whereas the outer subcarriers of the OFDM signal, which typically have significant contributions to the out of frequency band power, are modulated using a variable constellation, which is rotated by $\widetilde{\varphi}_{rotation}$ from OFDM symbol to OFDM symbol. As indicated above, the pilot tone is typically carried by the outmost subcarrier of the OFDM signal. Phase discontinuities at the symbol borders can be avoided by performing a phase shift of the corresponding subcarrier which compensates $\varphi_{CPPF}$.

Fig. 8 illustrates a receiver 800 which is configured to receive a WDM signal comprising two OFDM signals within two non-orthogonal subbands. In the receiver 800 a subband processing scheme is applied using one DSP (digital signal processor) unit 810, 820 per subband, each. Each DSP unit 810, 820 may comprise synchronization, baseband downconversion with subsequent low pass filtering. Independent synchronization and LO offset compensation units enable complete processing of the non-orthogonal subbands. The DSP units 810, 820 per subband may correspond to the DSP processing of OFDM receiver 130. In the subsequent processing steps 811, 821 the subcarriers constellation rotation and the pilot tone phase shift are considered to equalize each OFDM transmission channel.

In the present document a method and system for enabling high speed transmission over optical communication channels has been described. The method and system relate to the transmission of a plurality of OFDM signals over a plurality of different subbands, e.g. the subbands of a WDM system. In particular, a method for reducing the out of frequency band contributions of the OFDM signals is described, thereby reducing the interference between OFDM signals of adjacent subbands.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof. Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An OFDM transmitter (110) comprising

    - an inverse transform unit (113, 114, 115, 116) configured to transform a data sequence into a first and a succeeding second OFDM symbol; and
    - an extension unit (117) configured to add an extension of length D samples to the first OFDM symbol;

    wherein the inverse transform unit (113, 114, 115, 116) is configured to generate the second OFDM symbol in dependence of the extension length D.

2. The OFDM transmitter (110) of claim 1, wherein the inverse transform unit (113, 114, 115, 116) comprises an inverse frequency transform (115) configured to transform N OFDM subcarriers, thereby generating the first and second OFDM symbol.

3. The OFDM transmitter (110) of claim 2, wherein

    - the inverse transform unit (113, 114, 115, 116) comprises a mapping unit (114) configured to assign one or more bits of the data sequence to a data word corresponding to a point of a constellation of a modulation scheme; wherein the point of the constellation has a corresponding phase value; wherein the phase value is used to phase modulate an OFDM subcarrier of the $N$ OFDM subcarriers having an index n;
    - the inverse frequency transform (115) is configured to transform the N OFDM subcarriers comprising the modulated OFDM subcarrier n.

4. The OFDM transmitter (110) of claim 3, wherein

    - the mapping unit (114) is configured to perform a phase rotation $\widetilde{\varphi}_{rotation}$ of the constellation which is used for generating the second OFDM symbol with regards to the constellation which is used for generating the first OFDM symbol; and
    - the phase rotation $\widetilde{\varphi}_{rotation}$ is a function of the extension length $D.$

5. The OFDM transmitter (110) of claim 4, wherein the mapping unit (114) is configured to perform the phase rotation $\widetilde{\varphi}_{rotation}$ of the constellation separately for each of the N OFDM subcarriers.

6. The OFDM transmitter (110) of any of claims 4 or 5, wherein the phase rotation $\widetilde{\varphi}_{rotation}$ is dependent on a frequency of the OFDM subcarrier $n.$

7. The OFDM transmitter (110) of any of claims 4 or 6, wherein

    - the modulation scheme is M-PSK with M being an order of the modulation schem; and
    - the phase rotation of the constellation of OFDM subcarrier $n$ is any of

$$\widetilde{\varphi}_{rotation} = -\left\{\left(D\frac{n}{N}+\frac{1}{2M}\right)\mathrm{mod}\,\frac{1}{M}\right\}2\pi - 2i\frac{\pi}{M}$$

    with $i$ being any of $i = 0,..., M\text{-}1.$

8. The OFDM transmitter (110) of any of claims 2 to 7, wherein

   - the inverse frequency transform (115) is configured to transform the N OFDM subcarriers comprising an OFDM subcarrier m carrying a pilot tone; and
   - the inverse transform unit (113, 114, 115, 116) is configured to perform a phase shift of the OFDM subcarrier *m* to generate the second OFDM symbol.

9. The OFDM transmitter (110) of claim 8, wherein the phase shift is dependent on the extension length D and the frequency of the OFDM subcarrier m.

10. The OFDM transmitter (110) of any of claims 7 to 8, wherein the absolute value of the phase shift is

$$\varphi_{CPPF} = \left\{ \left( D\frac{m}{N} \right) \mathrm{mod1} \right\} 2\pi \, .$$

11. An OFDM receiver (130) comprising:

   - an extension removal unit (139) configured to remove an extension of length D from a first extended OFDM symbol, thereby yielding a first OFDM symbol; and
   - a transform unit (140, 141, 142) configured to transform the first OFDM symbol and a succeeding second OFDM symbol into a data sequence, by taking into account the extension length D.

12. The OFDM receiver (130) of claim 11, wherein

   - the transform unit (140, 141, 142) comprises a frequency transform (115) configured to transform the first and second OFDM symbol into N OFDM subcarriers comprising a phase modulated OFDM subcarrier n from which a first phase value and a second phase value can be extracted for the first and second OFDM symbol, respectively;
   - the transform unit (140, 141, 142) comprises a decision unit (142) configured to map the first and second phase value of the OFDM subcarrier n to a first and second data word, respectively; wherein the first and second data word correspond to a point of a constellation of a modulation scheme;
   - the decision unit (142) is configured to perform a phase rotation $\widetilde{\varphi}_{rotation}$ of the constellation which is used for mapping the second phase value to the second data word with regards to the constellation which is used for mapping the first phase value to the first data word; and
   - the phase rotation $\widetilde{\varphi}_{rotation}$ is a function of the extension length D.

13. A method for generating an OFDM signal comprising a first and second OFDM symbol and comprising reduced out of frequency band power, the method comprising:

   - generating the first and the succeeding second OFDM symbol from a data sequence; and
   - adding an extension of length D samples to the first OFDM symbol;

   wherein the second OFDM symbol is generated by taking into account the extension length D.

14. An OFDM signal comprising a first and a second OFDM symbol; wherein

   - the first OFDM symbol comprises a cyclic extension of length D;
   - data comprised within the first and second OFDM symbol is represented within a constellation of a modulation scheme;
   - the constellation used for the second OFDM symbol is rotated with regards to the constellation used for the first OFDM symbol; and
   - the degree of rotation is dependent on the extension length D.

15. An OFDM network, comprising

- a plurality of OFDM transmitters (110) according to any of claims 1 to 10, configured to generate a plurality of OFDM signals in adjacent frequency subbands from a data sequence; and
- a plurality of OFDM receivers (130) according to any of claims 11 to 12, configured to re-generate the data sequence from the plurality of OFDM signals.

Fig. 1

Fig. 2

Fig. 3

**Fig. 4**

**Fig. 5**

Fig. 6

**Fig. 7**

**Fig. 8**

**Europäisches Patentamt**
**European Patent Office**
**Office européen des brevets**

# EUROPEAN SEARCH REPORT

Application Number

EP 10 29 0441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAR-DIR CHUNG: "Spectrally Precoded OFDM", IEEE TRANSACTIONS ON COMMUNICATIONS, IEEE SERVICE CENTER, PISCATAWAY, NJ, US, vol. 54, no. 12, 1 December 2006 (2006-12-01), pages 2173-2185, XP011151655, ISSN: 0090-6778, DOI: DOI:10.1109/TCOMM.2006.884850 * abstract * * page 2177, left-hand column, line 23 - page 26 * * page 2177, right-hand column, line 7 - column 13 * * page 2181, left-hand column, line 21 - page 24 * * figure 1 * ----- | 1-6,8,9, 11-15 | INV. H04L27/20 H04L27/26 |
| X | EP 2 169 890 A1 (ERICSSON TELEFON AB L M [SE]) 31 March 2010 (2010-03-31) * abstract * * paragraphs [0032] - [0035], [0 39], [0 45]; figures 9, 13, 17 * ----- | 1-6,8,9, 13-15 | TECHNICAL FIELDS SEARCHED (IPC) H04L |
| X | WO 2007/123340 A2 (LG ELECTRONICS INC [KR]; LEE JUNG HOON [KR]; KIM EUN SUN [KR]; KIM BON) 1 November 2007 (2007-11-01) * abstract * * page 2, line 12 - line 23 * * page 6, line 16 - page 7, line 2 * * page 8, line 12 - line 21 * * figures 1-3 * ----- | 1-3,13, 14 | |

The present search report has been drawn up for all claims

| Place of search | Date of completion of the search | Examiner |
|---|---|---|
| Berlin | 14 January 2011 | Masche, Christian |

EPO FORM 1503 03.82 (P04C01)

**ANNEX TO THE EUROPEAN SEARCH REPORT
ON EUROPEAN PATENT APPLICATION NO.**                    EP 10 29 0441

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2011

| Patent document cited in search report | | Publication date | Patent family member(s) | | Publication date |
|---|---|---|---|---|---|
| EP 2169890 | A1 | 31-03-2010 | WO | 2010034360 A1 | 01-04-2010 |
| | | | US | 2010074349 A1 | 25-03-2010 |
| WO 2007123340 | A2 | 01-11-2007 | EP | 2014043 A2 | 14-01-2009 |
| | | | KR | 20070103917 A | 25-10-2007 |
| | | | US | 2009245399 A1 | 01-10-2009 |

EPO FORM P0459

For more details about this annex : see Official Journal of the European Patent Office, No. 12/82